# EUROPEAN PATENT APPLICATION

(11) **EP 2 017 775 A1**
(43) Date of publication of application: **21.01.2009**
(21) Application number: 06810696.2
(22) Date of filing: 28.09.2006
(51) Int. Cl.: G06Q 10/00, G06K 17/00

(54) **ASSET MANAGEMENT SYSTEM**

(30) Priority: 02.05.2006 JP 2006128181; 26.07.2006 JP 2006203348; 10.08.2006 JP 2006218858
(71) Applicant: Orient Instrument Computer Co., Ltd, Chuo-ku Osaka-shi 540-6035 (JP)
(72) Inventor: ITO, Tomoaki, c/o ORIENT INSTRUMENT COMPUTER CO., LTD.,, Osaka-shi, Osaka 540-6035 (JP)
(74) Representative: Johnstone, Douglas Ian
(86) International application number: PCT/JP2006/319238
(87) International publication number: WO 2007/129417

(57) **Abstract**

[Problem to be Solved by the Invention] To provide a property management system 1 capable of both managing a take-out state of a property item and managing the discard of the property item and thus to improve the convenience of a user and a manager.

[Means for Solving the Problems] A property management system 1 includes a management server 5 for managing the property item by a non-contact IC tag 19; a gate apparatus 15 provided at each of gates 15a through 15e, and a destruction apparatus 14 for destroying the property item. When destroying the property item, the destruction apparatus 14 transmits tag information read from the non-contact IC tag 19 to the management server 5 to perform a destruction completion registration. The gate apparatus 15 permits the property item to pass therethrough when it is determined, based on the tag information read from the non-contact IC tag 19 passing the gate, that the gate passage permission/non-permission information represents permission or when the destruction completion registration is already performed.

## Description

### TECHNICAL FIELD

The present invention relates to a property management system for managing a property item by, for example, attaching a non-contact IC medium to the property item.

### BACKGROUND ART

Conventionally,non-contactIC mediumscalled"RFID tags" for performing information communication in a non-contact manner using a magnetic field have been used. An object item management system for managing an object item by attaching such a non-contact IC medium to the object item has been proposed (see patent document 1).

This object item management system functions as follows. A user carries an RFID tag. When the user takes a book from a bookshelf, an ID number of the user is stored on an RFID tag attached to the book. When the RFID tag passes a gate, the ID number of the user is read from the RFID tag. In this manner, the take-out state of the object item is managed.

However, such an object item management system merely manages the movement of an object item, and cannot manage the object item as a property item. In addition, such an object item management system is insufficient to prevent unlawful acts such as information leaks.

Patent document 1: Japanese Laid-Open Patent Publication No. 2001-229263

### DISCLOSURE OF THE INVENTION

### Problems to be Solved by the Invention

In light of the above-described problems, the present invention has an object of providing a property management system capable of managing a take-out state of a property item and preventing an unlawful act to improve the convenience for the user and the manager.

### Means for Solving the Problems

The present invention is directed to a property management system comprising a management server for managing a property item by a non-contact IC medium attached to the property item; a gate apparatus provided at an entrance/exit or an aisle for reading medium information from the non-contact IC medium; and a destruction apparatus including a reader section for reading the medium information from the non-contact IC medium and a destruction section for destroying the property item. Gate passage permission/non-permission information regarding gate passage permission/non-permission for a property item having the non-contact IC medium attached thereto is stored on the management server or the non-contact IC medium. When destroying the property item, the destruction apparatus transmits the medium information to the management server to perform a destruction completion registration. The gate apparatus includes a determination device for determining whether the gate passage permission/non-permission information represents permission or non-permission based on the medium information read from the non-contact IC medium passing the gate apparatus; and a passage prohibition device for prohibiting passage when the determination result is non-permission. Even when the gate passage permission/non-permission information represents non-permission, if the read medium information indicates that the destruction completion registration is already performed, the determination device permits the passage.

In a preferable embodiment of the present invention, information processing apparatus for outputting information to an output medium may be included. The information processing apparatus may include a reader section for reading medium information from the non-contact IC medium attached to the output medium; an important information output medium registration device for, when the important information managed by the important information management server is output to the output medium, registering the medium information read by the reader section from the non-contact IC medium attached to the output medium in the management server as a property item; and a device for writing the important information gate passage permission/non-permission information as the gate passage permission/non-permission information regarding the output medium.

In a preferable embodiment of the present invention, the information processing apparatus may include a reading function of reading information from a medium. For reading information from the medium, the medium information is read from the non-contact IC medium attached to the medium by the reader section, and when the medium is not authorized, the information is prohibited from being read.

### Effect of the Invention

The present invention provides a property management system capable of managing a take-out state of a property item and preventing an unlawful act, and thus improves the convenience for a user and a manager.

### BRIEF DESCRIPTION OF THE DRAWINGS

[FIG. 1] A schematic view showing an arrangement of apparatuses of a property management system.
[FIG. 2] A view showing a structure of the property management system.
[FIG. 3] A block diagram showing a structure of a destruction apparatus.
[FIG. 4] A block diagram showing a structure of a gate apparatus.
[FIG. 5] A block diagram showing a structure of a non-contact IC tag.
[FIG. 6] A view showing a structure of tag information stored on a storage section of an IC chip in the non-contact IC tag.
[FIG. 7] A view showing a structure of a property management table of a management server.
[FIG. 8] A flowchart illustrating the processing of registering a property item.
[FIG. 9] A flowchart illustrating the processing of discarding a property item.
[FIG. 10] A flowchart illustrating the processing of determining whether the property item passing the gate is to be permitted to pass or not.
[FIG. 11] A flowchart illustrating the processing of searching for a location of a property item.
[FIG. 12] A schematic view showing an arrangement of apparatuses of a property management system in Example 2.
[FIG. 13] A view showing a structure of the property management system in Example 2.
[FIG. 14] A block diagram of a shredder in Example 2.
[FIG. 15] A view showing a structure of tag information in Example 2.
[FIG. 16] A view showing a structure of a property management table in Example 2.
[FIG. 17] A view showing a structure of an important information management table in Example 2.
[FIG. 18] A flowchart illustrating property registration processing in Example 2.
[FIG. 19] A flowchart illustrating important information output processing in Example 2.
[FIG. 20] A schematic view showing an arrangement of apparatuses of a property management system in Example 3.
[FIG. 21] A view showing a structure of the property management system in Example 3.
[FIG. 22] A view showing a structure of a property management table in Example 3.
[FIG. 23] A flowchart illustrating periodical inspection processing in Example 3.

### DESCRIPTION OF THE REFERENCE NUMERALS

1 ... property management system; 5 ... management server; 5c ... important information; 6 ... sales department notebook PC; 7 ... sales department PC; 11 ... development department PC; 12 ... operation department software; 14 ... destruction apparatus; 15 ... gate apparatus; 15a ... portal gate; 15b ... sales department gate; 15c ... operation department gate; 15d ... development department gate; 15e ... warehouse gate; 19 ... non-contact IC tag; 24 ... destruction section; 25 ... tag reader/writer section; 31 ... control section; 45 ... GPS unit; 51 ... paper medium; 71 ... CD-RW drive; 73 ... printer; 73a ... tag reader/writer section

Especially, when both write on and read from a medium are limited by a non-contact IC medium, an unlawful act that important information in the company is replaced by a third party can be eliminated with certainty.

The present invention can be provided as a comprehensive system of performing management of a take-out state of property items, management of output mediums having important information stored thereon, monitoring of the property items, management of the position of the property items, and inspection of the property items. In this case, all the property items can be monitored from introduction until discard without fail, unauthorized take-out of a property item and forgery of an output medium can be prevented, and thus a very firm security system can be provided.

### BEST MODE FOR CARRYING OUT THE INVENTION

One embodiment of the present invention will be described with reference to the drawings.

### Example 1

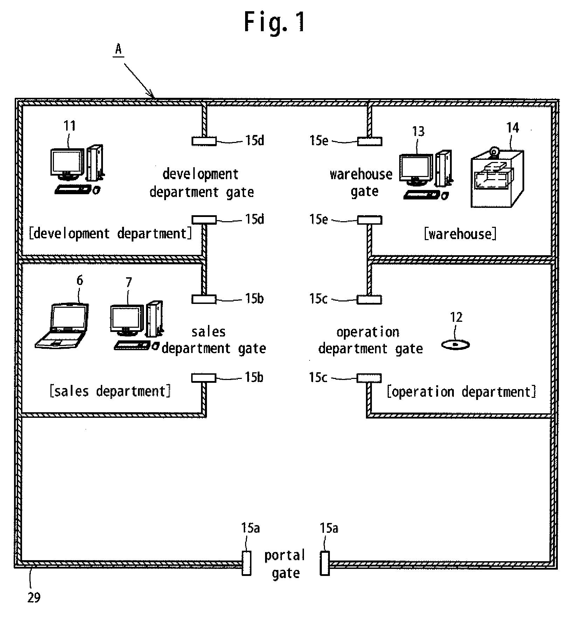

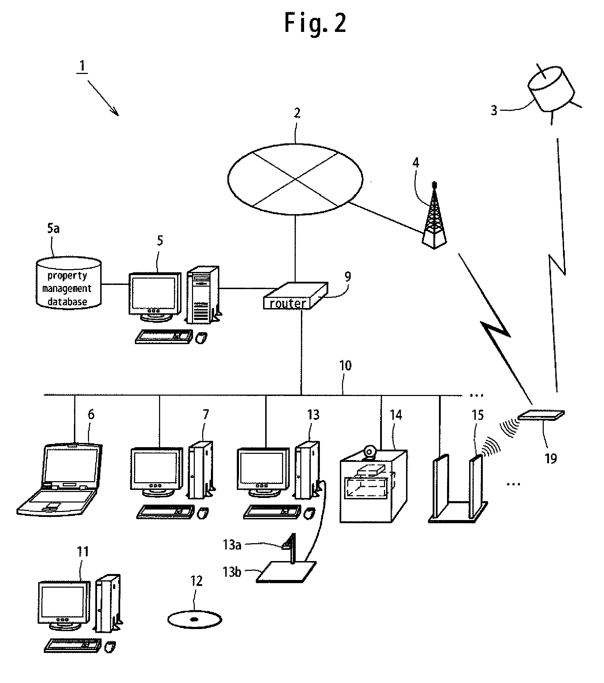

FIG. 1 is a schematic view illustrating an arrangement of apparatuses of a property management system 1. FIG. 2 shows a structure of the property management system 1. The property management system 1 has functions of managing a take-out state of a property item, managing introduction/discard of a property item, and managing entrance/exit of a person.

A facility A includes a portal acting as an entrance/exit of the facility A. Inside the entrance, the facility A includes areas for a sales department, a development department, an operation department, a warehouse and the like. The facility A is entirely covered with an electromagnetic wave shielding sheet 29, so that electromagnetic waves for non-contact communication are prevented from entering the inside from the outside. The electromagnetic wave shielding sheet 29 may preferably be formed of a metal material such as aluminum, copper or silver, or a communication wave shielding material formed of a resin containing an absorbing agent such as carbon or silicon.
The portal includes a portal gate 15a, an entrance/exit door of the sales department includes a sales department gate 15d, an entrance/exit door of the operation department includes an operation department gate 15c, an entrance/exit door of the development department includes a development department gate 15d, and an entrance/exit door of the warehouse includes a warehouse gate 15e.

Each department has various property items located therein. For example, the sales department has a sales department notebook PC 6 and a sales department PC 7 located therein. The operation department has operation department software 12 located therein. The development department has a development department PC 11 located therein. The warehouse has a destruction apparatus 14 located therein.

These property items each have a property item non-contact IC tag 19 attached thereto.
A person such as an employee who enters the facility A is required to carry a person non-contact IC tag 19 supplied to each such person.

As shown in FIG. 2, the property management system 1 includes the Internet 2, a GPS satellite 3, a base station antenna 4, a management server 5, the sales department notebook PC 6, the sales department PC 7; a router 9, a LAN 10, the development department PC 11; the operation department software 12, a registration apparatus 13, the destruction apparatus 14, the gate apparatus 15, and a non-contact IC tag 19.

The Internet 2 is a wide area communication line and mediates the communication from the management server 5 and the like connected thereto.

The GPS satellite 3 transmits a radio wave for position check to a GPS (Global Positioning System) unit. A plurality of GPS satellites 3 are provided.

The base station antenna 4 communicates with a long distance antenna provided in the non-contact IC tag 19. For example, the base station antenna 4 includes a base station antenna for wireless communication of a cellular phone.

The management server 5 includes property management database 5a, and thus manages a property item.

The sales department notebook PC 6, the sales department PC 7, and the development department PC 11 are each a personal computer located in the respective department. The sales department notebook PC 6 and the sales department PC 7 are communicably connected to the LAN 10. The development department PC 11 is not connected to the LAN 10 and is located independently.

The router 9 manages the communication between the apparatuses connected to the LAN 10, and allows the apparatuses connected to the LAN 10 to communicate with an external apparatus via the Internet 2.

The LAN 10 is connected to the management server 5, the sales department notebook PC 6, the sales department PC 7, the destruction apparatus 14, and the gate apparatus 15, and allows the apparatuses to communicate to each other.

The operation department software 12 is a medium such as a CD-ROM which has appropriate software such as wordprocessor software stored thereon.

The registration apparatus 13 is a terminal including a personal computer, and is communicably connected to the LAN 10. The registration apparatus 13 includes a digital camera 13a for taking an image of a property item to be registered and a table-like tag reader/writer 13b communicable with a non-contact IC tag 19 in a non-contact manner.

As shown in the figure, the table-like tag reader/writer 13b has an external shape of a rectangular table, and has a loop antenna inside an external periphery thereof and thus communicates with the non-contact IC tag 19 provided on the table. The digital camera 13a is provided above the table-like tag reader/writer 13b such that the shooting direction is downward. At the same time the table-like tag reader/writer 13b communicates with the non-contact IC tag 19, the digital camera 13a can take an image of the property item having the non-contact IC tag 19 attached thereto.

The destruction apparatus 14 physically destroys an apparatus such as a notebook PC, or a storage medium such as a CD, DVD, MO or USB memory. The destruction apparatus 14 is communicably connected with the LAN 10. For destroying an apparatus, the destruction apparatus 14, for example, physically makes a hole; and for destroying a storage medium, the destruction apparatus 14, for example, radiates a microwave.

Radiation of a microwave may destroy an IC chip 42 of the non-contact IC tag 19. Therefore, before radiation, a protection seal formed of a protective material such as aluminum, iron, Permalloy, orferrite ispreferably attached to an area of the storage medium having the non-contact IC tag 19 (IC chip 42). In this manner, the storage medium can be destroyed while the non-contact IC tag 19 is kept intact. The protective material used for the protection seal may be anything which can protect the IC chip 42 by, for example, changing the microwave into heat. For example, the protective seal may be formed by filling water as a protective material.

The gate apparatus 15 reads or write information by communicating with the non-contact IC tag 19 passing the gate in a non-contact manner. The gate apparatus 15 is communicably connected with the LAN 10. The gate apparatus 15 is provided in each of the portal gate 15a (see FIG. 1), the sales department gate 15b, the operation department gate 15c, the development department gate 15d, and the warehouse gate 15e.

The non-contact IC tag 19, when being attached to a property item, acts as an identifier for identifying the property item. When being carried by a person, the non-contact IC tag 19 acts as an identifier for identifying the person. In this example, each person carries one non-contact IC tag 19; and the management server 5, the sales department notebook PC 6, the sales department PC 7, the development department PC 11, the operation department software 12, the registration apparatus 13, and the destruction apparatus 14 as property items each have a non-contact IC tag 19 attached thereto.

The non-contact IC tag 19 has a function of performing non-contact communication with the gate apparatus 15, a function of receiving a radio wave from the GPS satellite 3 and obtaining the current position, and a function of performing wireless communication with the base station antenna 4.

The management server 5, the sales department notebook PC 6, the sales department PC 7, the development department PC 11, and the registration apparatus 13 are each a personal computer and each include, for example, a storage device including a hard disc or the like, a control device including a CPU or the like, an input device including a mouse, a keyboard or the like, and a display device including a liquid crystal display, a CRT display or the like. The management server 5, the sales department notebook PC 6, the sales department PC 7, and the registration apparatus 13 also each include a communication device including a LAN board, a wireless LAN card or the like.

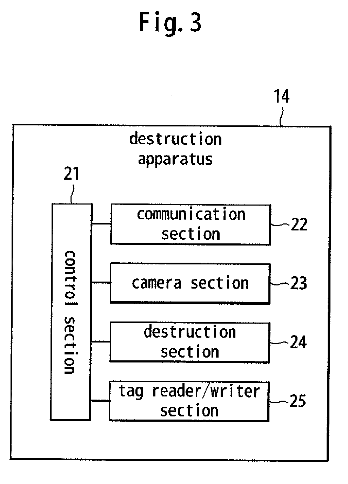

FIG. 3 is a block diagram showing a structure of the destruction apparatus 14.
The destruction apparatus 14 includes a control section 21 including a CPU, a ROM and a RAM, a communication section 22 for communicating through connection with the LAN 10, a camera section 23 including the digital camera, a destruction section 24 for causing a destruction terminal to pierce into a plurality of positions of a property item to be destroyed using an appropriate driving device such as a solenoid or a motor, or for radiating a microwave, and a tag reader/writer section 25 for communicating with the non-contact IC tag 19 in a non-contact manner.

The camera section 23 includes two cameras, i.e., a destroyer shooting camera for taking an image of a destroyer who destroys the property item and a destruction evidence shooting camera for taking an image of the post-destruction property item as evidence of the destruction.

The destruction apparatus 14 is connected to a personal computer which is not shown. The destruction apparatus 14 transmits destroyer image information and post-destruction property item image information which were taken by the camera section 23 and tag information of the non-contact IC tag 19 attached to the destroyed property item to the personal computer. The personal computer transmits the information to the management server 5 via the LAN 10.

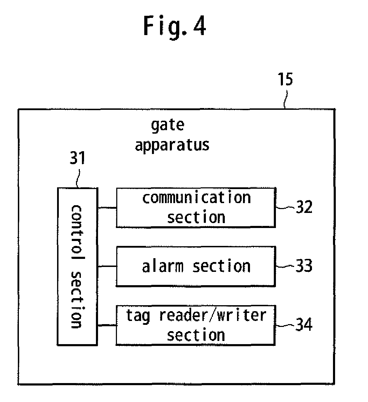

FIG. 4 is a block diagram showing a structure of the gate apparatus 15.
The gat apparatus 15 includes a control section 31 including a CPU, a ROM and a RAM, a communication section 32 for communicating with the management server 5 via the LAN 10, an alarm section 33 for issuing an alarm via an audio output through a speaker, light emission from an LED or the like, and a tag reader/writer section 34 for communicating with the non-contact IC tag 19 in a non-contact manner.

The gate apparatus 15 determines whether passage should be permitted or not based on the tag information read from the non-contact IC tag 19 by the tag reader/writer section 34. When the passage should not be permitted, the gate apparatus 15 performs an operation of issuing an alarm by the alarm section 33. When it is detected that the passage is completed, the gate apparatus 15 performs an operation of transmitting the movement information on the non-contact IC tag 19 to the management server 15.

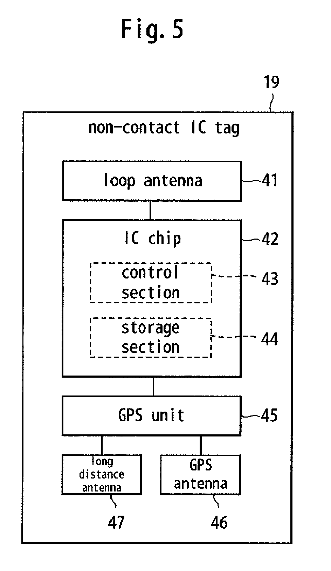

FIG. 5 is a block diagram showing a structure of the non-contact IC tag 19.
The non-contact IC tag 19 includes the loop antenna 41 for communicating with the tag reader/writer section 34 of the gate apparatus 15 and the tag reader/writer section 25 of the destruction apparatus 14 in a non-contact manner, the IC chip 42, the GPS unit 45, a GPS antenna 46, and a long distance antenna 47. The IC chip 42 includes a control section 43 and a storage section 44.

The GPS unit 45 is a control section including a CPU, a ROM, a RAM and the like. The GPS unit 45 receives a radio wave transmitted from a plurality of GPS satellites 3 by the GPS antenna 46, finds the distance to each of the GPS satellites 3 based on the radio wave, and obtains the current position of the GPS antenna 46, i.e., the current position of the non-contact IC tag 19 as current position information based on the distance and the current position of each GPS satellite 3. The GPS unit 45 also receives, by the long distance antenna 47, current position inquiry information transmitted from the management server 5 via the base station antenna 4; and when receiving the current position inquiry information, transmits the current position information obtained in the above-described manner to the management server 5 by the long distance antenna 47. While being in the facility A, the GPS unit 45 cannot communicate with any GPS satellite 3 due to the electromagnetic wave shielding sheet 29. Therefore, after taken outside the facility A, the GPS unit 45 communicates with the GPS satellite 3 and obtains the current position information.

The GPS unit 45 may transmit the distance obtained based on the radio wave received from each GPS satellite 3 to an appropriate position measurement server or the like. In this case, the position measurement server which receives the distance may find the current position of the non-contact IC tag 19 based on the position of each GPS satellite 3 and the received information.

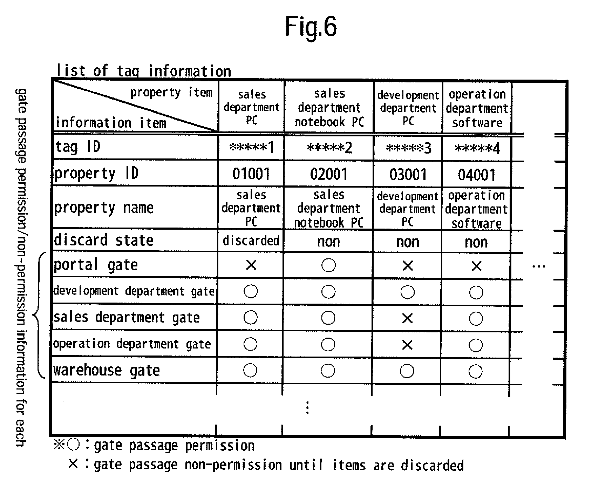

FIG. 6 shows a structure of tag information stored on the storage section 44 in the IC chip 42 of the non-contact IC tag 19. In this figure, tag information of a plurality of non-contact IC tag 19 respectively attached to a plurality of property items is shown in one table.

The tag information includes information items of tag ID, property ID, property name, discard state, and gate passage permission/non-permission information for each gate. In this embodiment, the gate passage permission/non-permission information for each gate includes information concerning "portal gate", "development department gate", "sales department gate", "operation department gate", and "warehouse gate".

When a person is required to carry a non-contact IC tag 19, an ID of that person is stored in the property ID and the name of that person is stored in the property name. If the registration of that person has been erased (for example, if the employee has left the company), "completed" is stored in the discard state.

By the tag information, the non-contact IC tag 19 stores the information on whether each property item and each person is permitted to pass the gate and information on whether each property item and each person has been discarded. Thus, the gate apparatus 15 provided at each gate can determine whether or not to permit the passage based on the tag information.

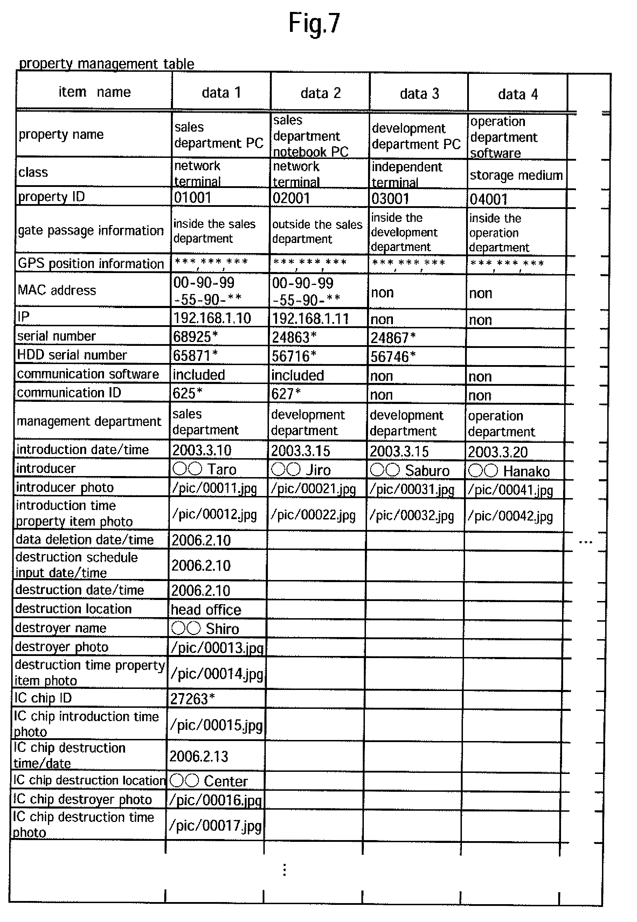

FIG. 7 shows a structure of a property management table stored on the property management database 5a of the management server 5.
The property management table includes property name, class, property ID, gate passage information, GPS position information, MAC address, IP, serial number, HDD serial number, communication software, communication ID, management department, introduction date/time, introducer, introducer photo, introduction time property item photo, data deletion date/time, destruction schedule input date/time, destruction date/time, destruction location, destroyer name, destroyer photo, destruction time property item photo, IC chip ID, IC chip introduction time photo, IC chip destruction time/date, IC chip destruction location, IC chip destroyer photo, IC chip destruction time photo and the like.

The property name stores the name of the property item having a non-contact IC tag 19 attached thereto as a management target. In the case of the non-contact IC tag 19 carried by a person, the property name stores the name of the person.

The class stores the information on whether the management target is a network terminal connected to the LAN 10, an independent terminal not connected to the LAN 10, a storage medium such as a CD-ROM, or a person.

The property ID stores an unique ID assigned to each property item. In the case of an non-contact IC tag 19 carried by a person, the property ID stores a unique ID assigned to each person (for example, an employee number).

The gate passage information stores the name (or the ID) of the last gate which the property item or person passed and the direction of passage.
The GPS position information stores the latest position information obtained from the GPS unit 45 of the non-contact IC tag 19.

The MAC address stores a MAC address inherently assigned to a communication apparatus as a network terminal.
The IP stores an IP address assigned to a network terminal such as the sales department notebook PC 6 or the sales department PC 7.
The serial number stores a serial number assigned to a property item such as a terminal or a medium by the manufacturer.
The HDD serial number stores a serial number of an HDD (hard disc drive).
The communication software stores the information on whether or not there is software for communication with the management server 5.
The communication ID stores an ID used to log in the communication server 5.
The management department stores the name of a department which manages the property item. In the case of a person, the management department stores the name the department to which the person belongs.

The introduction date/time stores the date/time at which the property item was purchased and introduced. In the case of a person, the introduction date/time stores the registration time such as the date/time at which the person joined the company.
The introducer name stores the name of a person in charge at the time of introduction.
The introducer photo stores a facial photo of the person in charge at the time of introduction.
The introduction time property item photo stores an image of the property item taken at the time of introduction. In the case of a person, the introduction time property item photo stores a facial photo of the person.

The data deletion date/time stores the date/time at which the data stored on the property item was deleted.
The destruction schedule input date/time stores the date/time at which the destruction schedule is accepted.
The destruction date/time stores the date/time at which the property item was destroyed. In the case of a person, the destruction date/time stores the date/time at which the registration was erased.
The destruction location stores the location at which the property item was destroyed.
The destroyer name stores the name of a person in charge who destroyed the property item.
The destroyer photo stores a facial photo of the person in charge who destroyed the property item.
The destruction item property item photo stores a photo proving that the property item was destroyed.

The IC chip ID stores an ID assigned to the IC chip 42 of the non-contact IC tag 19 (see FIG. 1) attached to the property item.
The IC chip introduction time photo stores an image of the non-contact IC tag 19 including the IC chip 42 attached to the property item, the image being taken at the time of introduction.
The IC chip destruction time/date stores the date/time at which the IC chip 42 was destroyed.
The IC chip destruction location stores the location at which the IC chip 42 was destroyed.
The IC chip destroyer photo stores a facial photo of a person in charge who destroyed the IC chip 42.
The IC chip destruction time photo stores a photo proving that the IC chip 42 was destroyed.

By the property management table, the management department of the property item, the department to which the person belongs, the introduction information, the discard information, the gate passage information, the current position information and the like are managed. The destruction of the IC chip 42 can be performed by an appropriate contractor outside the facility A after the property item is discarded, and the result of destruction performed by the contractor can be registered in the management server 5.

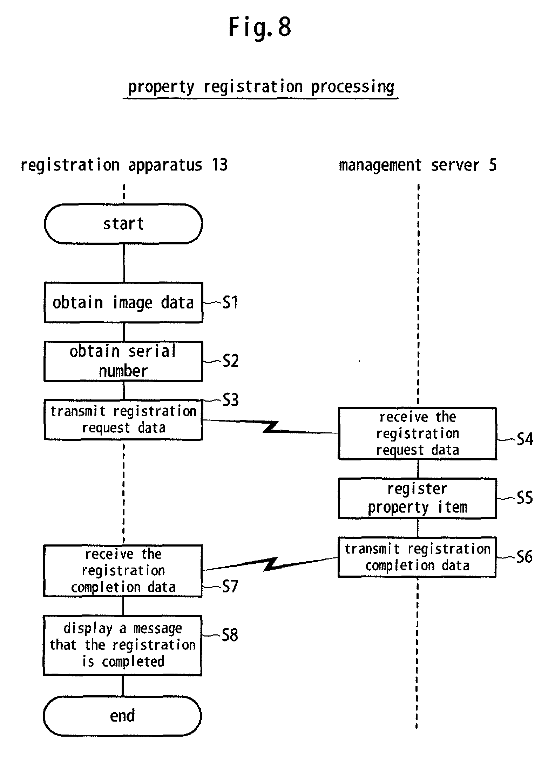

FIG. 8 is a flowchart illustrating the processing of, when a property item is introduced, attaching a non-contact IC tag 19 to the property item for registration.
A non-contact IC tag 19 is attached to the property item to be introduced by a person in charge of introduction (or a manager of the property item to be introduced), the property item is placed on the table-like tag reader/writer 13b, and the registration information is input. Then, the registration apparatus 13 communicates with the non-contact IC tag 19 existing above the table-like tag reader/writer 13b and reads the tag information (step S2). On this stage, the non-contact IC tag 19 stores a tag ID as the tag information. Therefore, the tag ID is read.

At the same time as, or substantially at the same time as, the tag information is read, the registration apparatus 13 takes an image of the property item on the table-like tag reader/writer 13b by the digital camera 13a and obtains image data of the property item (step S1). The image data of the property item is obtained so that the external appearance of the property item to be introduced, the position of the non-contact IC tag 19 attached to the property item and the like can be confirmed later. At this point, for example, a facial photo of the person in charge of introduction of the property item may be taken to obtain the facial image data. By obtaining the image data and reading the tag information at the same time or substantially at the same time, it does not occur that the read tag information and the property item in the image data do not match.

The registration apparatus 13 transmits registration request data to the management server 5 (step S3). The registration request data includes the tag ID obtained in step S2 and image data obtained in step S1. The registration request data may optionally include the name of the property item input by the person in charge of introduction, the serial number assigned to the property item by the manufacturer, the HDD serial number, the name of the property item, the gate passage permission/non-permission information for each gate, and the like.

The management server 5 receives the registration request data (step S4), and additionally stores data regarding the property item of the request in the property management table (see FIG. 7) as property item information (step S5). At this point, the management server 5 generates a non-overlapping unique property item ID and registers the property item ID in the property management table. The management server 5 transmits registration completion data to the registration apparatus 13 (step S6)

The registration apparatus 13 receives the registration completion data (step S7), and stores the property item ID, the gate passage permission/non-permission information for each gate, information that the discard has not been performed, and the like included in the registration completion data, on the storage section 44 in the non-contact IC tag 19 for registration (step S8).

When the registration is completed, the registration apparatus 13 displays a message that the registration is completed on the display section (step S8) and terminates the processing.

By this operation, the introduced property item can be registered in the property management table of the management server 5. Also, the gate passage permission/non-permission information for each gate, and the information on whether the non-contact IC tag 19 has been discarded or not can be stored on the storage section 44 in the non-contact IC tag 19. In the case where a person is registered in the property management table, substantially the same processing is performed.

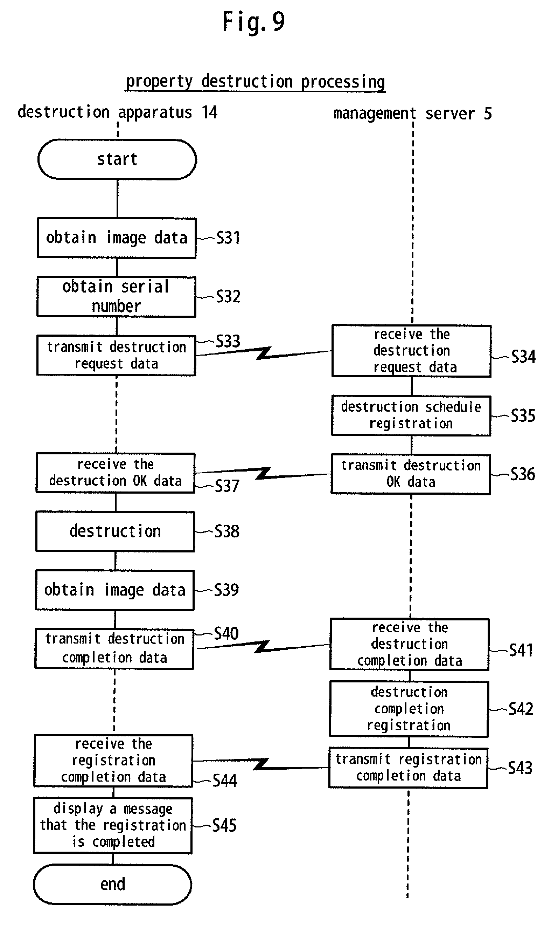

FIG. 9 is a flowchart illustrating an operation of property destruction processing of the property management system 1 which is performed for discarding the property item by physical destruction. In the case where the property item is a PC, a hard disc or the like which has a magnetic storage medium, this processing may be performed after, for example, the magnetic data is deleted by an appropriate demagnetization apparatus or the like.

The destruction apparatus 14 takes an image of a property item to be destroyed and a facial image of a person who will perform the destruction by the destroyer shooting camera of the camera section 23, and obtains image data of the pre-destruction property item and facial image data (step S31) . The image data of the pre-destruction property item is obtained so that it can be confirmed later whether none of the external appearance of the property item, the position of the non-contact IC tag 19 attached to the property item and the like has been changed from that at the time of introduction.

The destruction apparatus 14 reads, by the tag reader/writer section 34, tag information including the property item ID from the non-contact IC tag 19 attached to the property item at the time of introduction (step S32). The destruction apparatus 14 transmits destruction request data to the management server 5 (step S33). The destruction request data includes image data obtained in step S31 and the property item ID obtained in step S32.

The management server 5 receives the destruction request data (step S34), and checks whether or not there is corresponding property item information in the property managementtable. When there is corresponding property item information, the current date/time is stored in the destruction schedule input date/time for registration (step S35). The management server 5 transmits destruction OK data to the destruction apparatus 14 (step S36).

When there is no corresponding property item information in step S35, an error message may transmitted to the destruction apparatus 14 and the processing may be terminated.
The processing in step S35 maybe performed as follows. The image data of the property item obtained in step S1 (the data stored in the property management table 21 as the introduction time property item photo) and the image data of the pre-destruction property item obtained in step S31 are compared to each other by image processing, and it is determined whether or not the two pieces of image data match each other. When the two pieces of image data match each other, the destruction is permitted in step S36; whereas when the two pieces of image data do not match each other, an error message is output in step S36.

In step S33, various types of information including the property item ID, the MAC address, the IP, the HDD serial number, the communication software presence/absence, and the communication ID may be transmitted as well as the serial number. In step S35, it may be determined whether or not all such information matches. By performing checking using apluralityof pieces of information, it can be checked without fail whether or not the property item has been changed since the time of introduction. For example, when a built-in HDD has been changed, such a change can be detected.

The destruction apparatus 14 receives the destruction OK data (step S37), and physically destroys the property item inserted into the destruction section 24 (step S38).

When the destruction is completed, the destruction apparatus 14 takes an image of the post-destruction property item by the destruction evidence camera (the camera section 23) provided in the destruction section 24 and obtains image data, in order to leave the evidence that the property item was destroyed while the property item was still inserted into the destruction section 24 (step S39).

The destruction apparatus 14 transmits destruction completion data including the image data obtained in step S39 and the property item ID obtained in step S32 to the management server 5 (step S40).

The management server 5 receives the destruction completion data (step S41), and performs a destruction completion registration in the corresponding property item information in the property management table (step S42). In the destruction completion registration, the image obtained in step S39 is registered as the destruction time property item photo, and the current time is registered as the destruction date/time, for example.

When the registration is completed, the management server 5 transmits registration completion data to the destruction apparatus 14 (step S43).

The destruction apparatus 14 receives the registration completion data (step S44), updates the item of "discard" in the tag information stored on the storage section 44 in the non-contact IC tag 19 (see FIG. 6) from "not discarded yet" to "discarded" to register that the property item has been destroyed (step S45).

The destruction apparatus 14 displays a message that the registration is completed on an appropriate display section (step S45) and terminates the processing.

By this operation, thepropertyitemcanbedestroyed with certainty and the evidence of destruction can be left in the property management table 21 of the management server 5 with certainty. It can be registered in the non-contact IC tag 19 attached to the property item that the property item has been discarded.

For erasing the registration of a person, the registration apparatus 13 maybe used to register "discarded" in the discard state of the property management table 21 and register "discarded" in the discard state stored on the storage section 44 in the non-contact IC tag 19.

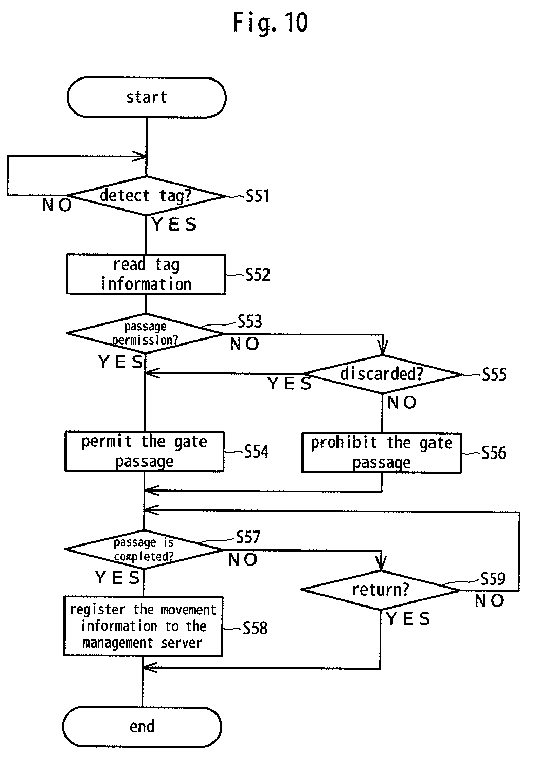

FIG. 10 is a flowchart illustrating the processing by which the gate apparatus 15 determines whether or not a property item is permitted to pass the gate.
When the gate apparatus 15 detects the existence of the non-contact IC tag 19 by the tag reader/writer section 34 (step S51: YES), the gate apparatus 15 reads tag information from the non-contact IC tag 19 by the tag reader/writer section 34 (step S52).

The gate apparatus 15 determines whether or not "permitted" (in the example shown in FIG. 6, "○ ") is registered in the gate passage permission/non-permission information on the gate corresponding thereto (step S53). When, for example, a person in charge of sales is taking out the sales department notebook PC 6 from the sales department, the gate apparatus 15 provided in the sales department gate 15b (FIG. 1) reads that "○ " is stored in the item of "sales department gate" in the tag information.

When the reading result is "permitted" (step S53: YES), the gate apparatus 15 performs the processing of permitting the gate passage (step S54). In the processing of permitting the gate passage, it is notified that the passage is permitted by, for example, lighting up a blue LED.

When the passage is "not permitted" (step S53: NO), the gate apparatus 15 determines whether or not the property item has been discarded based on whether or not the item of "discard" of the tag information is "discarded" (step S55). When the property has been discarded (step S55: YES), the gate apparatus 15 advances the processing to step S54 to permit the passage.

When the property item has not been discarded (step S55: NO), the gate apparatus 15 performs the processing of prohibiting the gate passage (step S56). In the processing of prohibiting the gate passage, the passage is inhibited by, for example, lighting up a red LED and outputting an audio signal to inform that the passage is prohibited. An open/close door which is driven by a driving device such as a motor or a solenoid may be provided, so that the open/close door is closed when the passage is prohibited.

After steps S54 or S56, the gate apparatus 15 determines whether or not the passage of the non-contact IC tag 19 has been completed (whether or not the non-contact IC tag 19 has completely crossed from one end to the other end of the communication area) by the tag reader/writer section 34 (step S57).

The gate apparatus 15 waits until the passage is completed (step S57: NO; step S59: NO). When it is determined that the non-contact IC tag 19 was returned (step S59: YES), the gate apparatus 15 terminates the processing.

When it is determined that the passage has been completed (step S57: YES), the gate apparatus 15 transmits the movement information showing that the property item has been moved to the management server 5 (step S58), and terminates the processing. The transmission of the movement information is performed by transmitting the property item ID and the gate passage information (for example, "out of the sales department" which indicates that the property item has moved out of the sales department through the sales department gate) in the tag information read in step S52 to the management server 5. Upon receipt of the movement information, the management server 5 updates the gate passage information in the property management table (see FIG. 7).

By this operation, it can be determined by the gate apparatus 15 whether or not the property item is permitted to pass, so that the property item prohibited from passing can be prevented from passing the gates 15a through 15e. When a property item passed one of the gates 15a through 15e, the passage can be registered in the property management table of the management server 5. When a non-contact IC tag 19 carried by a person passes one of the gates 15a through 15e, the same processing is performed.

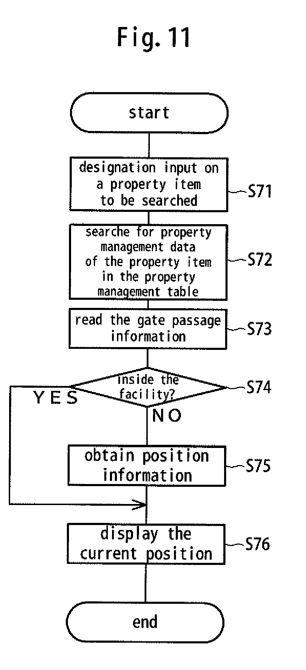

FIG. 11 is a flowchart illustrating the processing by which the management server 5 searches for the location of a property item.
When the management server 5 accepts a designation input on a property item to be searched for from an appropriate terminal connected to the LAN 10 (for example, the sales department notebook PC 6 or the sales department PC 7) (step S71), the management server 5 searches for property management data of the property item in the property management table (step S72). The data permitted for designation input in step S71 may be formed of data which can identify the property item, such as a property item ID or a property item name.

The management server 5 reads the gate passage information on the property management data hit by the search (step S73) and determines whether or not the property item is inside the facility (step S74). When data stored in the gate passage information represents "outside the portal gate", the property item can be determined to be outside the facility; and otherwise, the property item can be determined to be inside the facility.

When the property item is inside the facility (step S74: YES), the management server 5 transmits, as a response, the current position determined based on the gate passage information (for example, when the gate passage information represents "inside the sales department gate", the current position is "in the sales department") to the terminal which made the inquiry as a response, and displays the current position on the display section of the terminal (step S76).

When the property item is outside the facility (step S74: NO), the management server 5 communicates with the non-contact IC tag 19 using the base station antenna 4 to cause the GPS unit 45 of the non-contact IC tag 19 to measure the current position, and receives the current position as a response (step S75). The management server 5 transmits, as a response, the obtained current position to the terminal which made the inquiry, and displays the current position on the display section of the terminal (step S76).

By this operation, the location of the property item can be easily found through the search.
By the above-described structure and operation, the take-out state of a property item, discard of a property item, and entrance/exit of a person can be managed, and thus the convenience of the user and the manager can be improved.
Inmoredetail, even a property item, which is usually not permitted to pass the gate and thus cannot be taken out, can be permitted to pass the gate once such a property item is destroyed and discarded. At the time of the discard processing, the property item is registered as being "discarded". Therefore, for example, such a waste can be avoided that after an introduction manager who is in charge of the property item from introduction until discard performs the discard processing, a take-out manager who is in charge of take-out permits the property item to be taken out.

As a result, for a user such as an employee wishing to discard a property item, it is not necessary to obtain two approvals separately and thus the convenience is improved. For the management side, the manager in charge of take-out needs to manage the take-out state of only the property items which have not been discarded, and the manager in charge of introduction needs to manage only the introduction and discard. Thus, extra approvals are not necessary and the convenience is improved.

Optionally, the person in charge of introduction can check the take-out state of a property item, or the person in charge of take-out can check the discard state of a property item. Thus, the management of a property item from introduction until discard and the management of the take-out state of a property item can be both efficiently provided.

The information on introduction and discard of a property item can be stored and accumulated with certainty. Especially, image data of a person who introduced the property item or image data of a person who destroyed the property item can be stored in the property management table. This is useful for proving the introduction records and destruction records. This can also enhance the responsibility awareness of a person who introduces or destroys a property item.

A correct property item can be destroyed with certainty after confirming that the property item has not been changed since introduction. Therefore, it can be avoided that a part of the components of the property item (for example, a hard disc) leaks or becomes missing at some point between introduction and discard. Even if such an event occurs, such occurrence can be detected. Therefore, for example, it can be proved that no component of the property item leaked from introduction until discard.

In addition to the management of property items, entrance/exit of people can be managed. The gate apparatus 15 can be used for both managing the take-out of the property items and managing the entrance/exit of the people. A comprehensive system can be constructed at a low cost.

Inside the facility A, the location of the property item can be specified by managing the passage thereof through the gate apparatus 15. Outside the facility A, the location of the property item can be specified by the GPS unit 45. Especially inside the facility A, the communication wave is shielded by the electromagnetic shielding sheet 29. Therefore, the GPS unit 45 obtains the current position only when the property item is outside the facility A. Thus, the location of the property item can be efficiently managed without wasteful communication.

Since the facility A is entirely covered with the electromagnetic wave shielding sheet 29, information can be prevented from leaking outside as a result of non-contact communication being performed from outside. Especially, wiretapping or sneak photographing of installing a microphone or a camera in a room and transmitting the data by non-contact communication can be prevented. Since the facility A is entirely covered with the electromagnetic wave shielding sheet 29, the communication wave used for wiretapping or sneak photographing and the communication wave for GPS can be blocked. The non-contact communication performed in the facility A can be protected against crossing or disturbance. A stable operation environment can be provided.

The management server 5 is provided inside the facility and is connected to the LAN 10. The management server 5 may be connected to the Internet 2 and provided outside the facility. In this case, a communication permission may be given to a plurality of facilities, so that each facility or business is assigned a facility ID or a business ID for management. Thus, a property management system 1 can be provided in each facility or each business. As a result, the facility or business which introduces the property management system 1 does not need to prepare the management server 5, and thus the cost can be reduced.

It is determined whether or not the non-contact IC tag 19 passing the gate apparatus 15 has been discarded based on the tag information read from the non-contact IC tag 19. Alternatively, such a determination may be performed based on whether or not the destruction date/time is registered in the property management table of the management server 5, or based on both of the tag information and the property management table.

### Example 2

As Example 2, a property management system 1a for managing a take-out state of a property item, introduction and discard of a property item and entrance/exit of a person, and also for managing electronic information as a property item will be described.

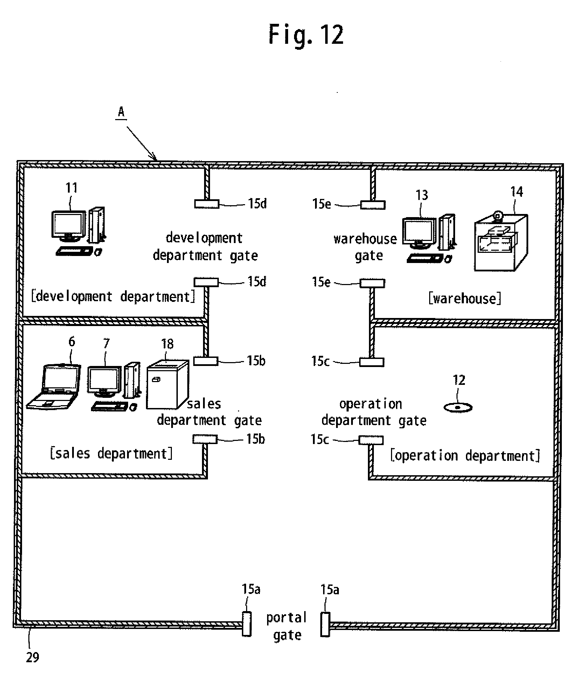

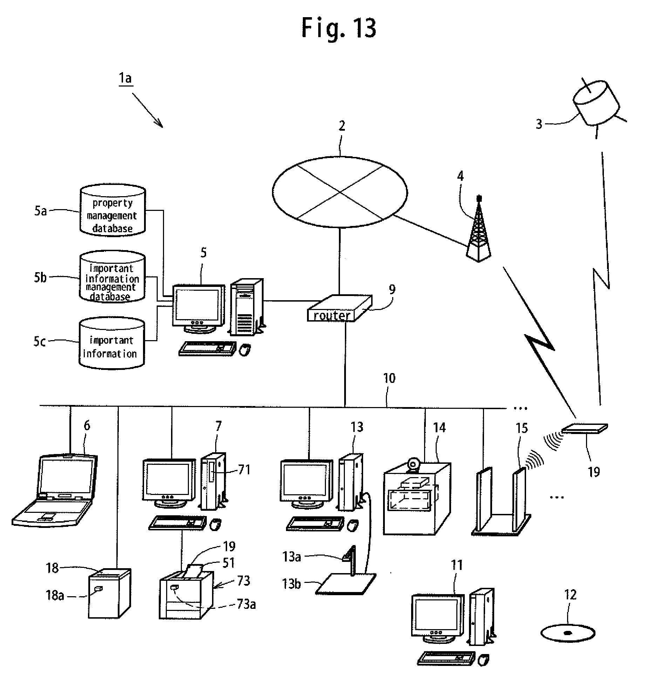

FIG. 12 is a schematic view showing an arrangement of apparatuses of a property management system 1a. FIG. 13 shows a structure of the property management system 1a.
The property management system 1a has a structure in which a shredder 18 and a printer 73 are mainly added as hardware, and important information management database 5b and important information 5c are mainly added as information, to the property management system 1 in Example 1.

The important information management database 5b manages important information 5c such as information which is prohibited from being taken outside the company or information which is permitted to be output only by a part of the employees.

Thus, the management server 5 in Example 2 manages the output of the important information 5c in addition to the property items. The important information 5c is comprehensively stored on the management server 5, and accesses from a terminal such as the sales department notebook PC 6 or the sales department PC 7 to the important information 5c are limited. In order to provide such a limitation, a terminal such as the sales department notebook PC 6 or the sales department PC 7 has special output software for outputting the important information 5c installed thereon. The management server 5 rejects an access to the important information 5c which is not by the special output software. Only when the important information 5c is accessed using the special output software, the management server 5 determines, for example, whether or not to permit the access and then permits the access.

The shredder 18 includes a shredding section (not shown) for shredding a paper medium and a tag reader/writer section 18a for reading tag information from the non-contact IC tag 19 attached to the paper medium.

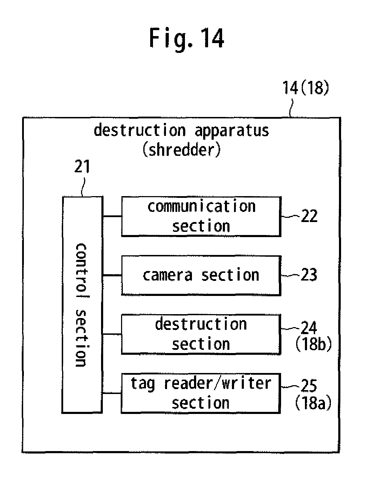

The shredder 18 functions as a destruction apparatus for shredding and destroying a paper medium, and has the same function as that of the destruction apparatus 14 connected to the LAN 10.
As shown in a block diagram of FIG. 14, the shredder 18 includes a control section 21, a communication section 22, a camera section 23, a destruction section 18b, and a tag reader/writer section 18a like the destruction apparatus 14. The shredder 18 has the same structure and operates in the same manner as the destruction apparatus 14 (the destruction section 24) except that the destruction section 18b destroys a paper medium by shredding.

The sales department PC 7 includes a CD-RW drive 71 and the printer 73 as an apparatus for outputting information in addition to the structure in Example 1.

The CD-RW drive 71 is a reader/writer for reading or writing information from/to a CD-RW (compact disc rewritable), which is a type of output medium. The CD-RW drive 71 reads tag information from the non-contact IC tag 19 attached to the CR-RW by a tag reader/writer section (not shown) and also transmits the tag information to the sales department PC 7.
Therefore, the sales department PC 7 can be limited in information write and information read, such that information such as the important information 5c can be written only to, or read only from, an authorized CD-RW having an authorized non-contact IC tag 19.

The printer 73 is an apparatus for printing information onto a paper medium 51 in accordance with a printing signal received from the sales department PC 7. The printer 73 includes a tag reader/writer section 73a, and reads tag information from a non-contact IC tag 19 attached to the paper medium 51 and also transmits the tag information to the sales department PC 7. The tag reader/writer section 73a may be provided at an appropriate location, for example, in a paper feeding section or a printing head such that tag information can be obtained from each sheet of the paper medium 51 which is fed for printing.

Except for the above-described elements, the property management system 1a is the same as the property management system 1 in Example 1. Like elements bear the same reference numerals and will not be described in detail.

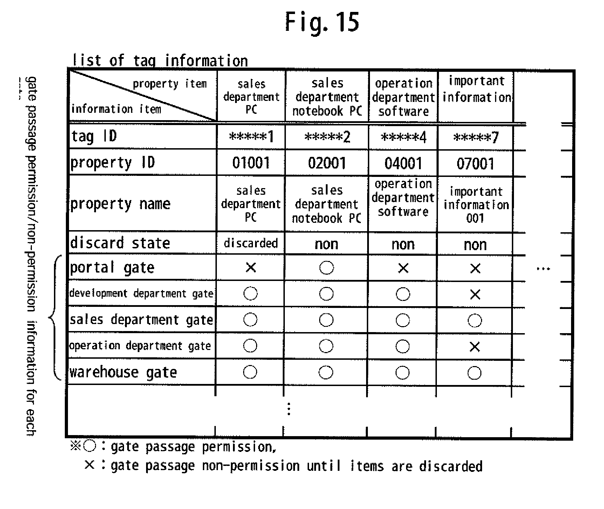

FIG. 15 shows a structure of tag information stored on the storage section 44 in the IC chip 42 of the non-contact IC tag 19. In this figure, tag information of a plurality of non-contact IC tag 19 respectively attached to a plurality of property items is shown in one table.

The structure of the tag information is the same as that in Example 1. When the important information 5c is output to an output medium such as the paper medium 51 or the CD-RW, gate passage permission/non-permission information for each gate on the important information 5c is stored on the non-contact IC tag 19 attached to the output medium. The gate passage permission/non-permission information for each gate on the important information 5c is the information registered in the important information management database 5b of the management server 5 with no change.

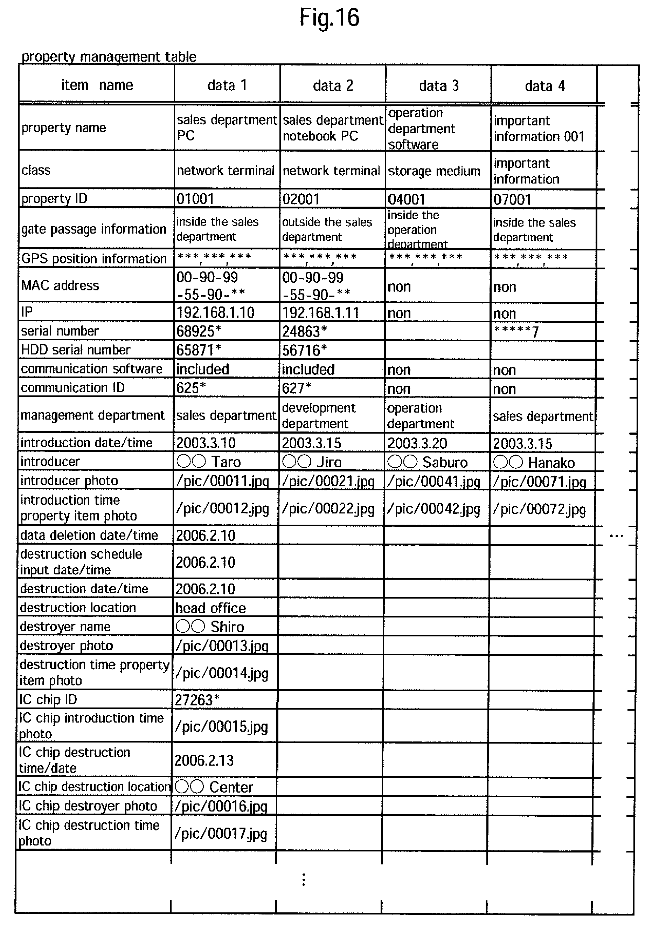

FIG. 16 shows a structure of a property management table stored on the property management database 5a of the management server 5.
The structure of the property management table is the same as that in Example 1. For managing an output medium having the important information 5c as a property item, the same information items as those of the other property items are registered on the important information 5c as exemplified in data 4.

In the "class", it is stored whether the information is the "important information" which needs to be managed in terms of the take-out state or information which does not need to be managed in terms of the take-out state.
In the "serial number", the tag ID of the non-contact IC tag 19 or the serial number of the PC (e.g., the sales department PC 7) which stores the important information is stored. The tag ID preferably allows the owner of the output medium to be determined later.

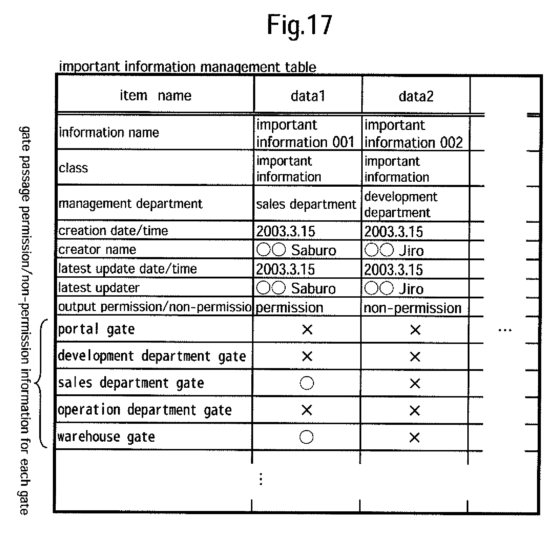

FIG. 17 shows a structure of a property management table stored on the important information management database 5b of the management server 5.
The important information management database 5b includes information name, class, management department, creation date/time, creator name, latest update date/time, latest updater, output permission/non-permission information, gate passage permission/non-permission information for each gate, and the like.

The information name stores the name of the important information 5c.
The class stores whether the information is important information 5c which needs to be managed.
The management department stores the name of the department which manages the important information 5c.
The creation date/time stores the date/time at which the important information 5c was created.
The creator name stores the name of the person who created the important information 5c.
The latest update date/time stores the date/time at which the important information 5c was updated most recently.
The latest updater stores the name of the person who updated the important information 5c most recently.
The output permission/non-permission information stores whether the output of the important information 5c is permitted or not.
The gate passage permission/non-permission information for each gate includes information concerning portal gate, development department gate, sales department gate, and warehouse gate. The gate passage permission/non-permission information for each gate stores whether the passage of the important information 5c through each gate is permitted or not.

The property management system 1a having the above-described structure performs the following operation in addition to the operation described in Example 1.

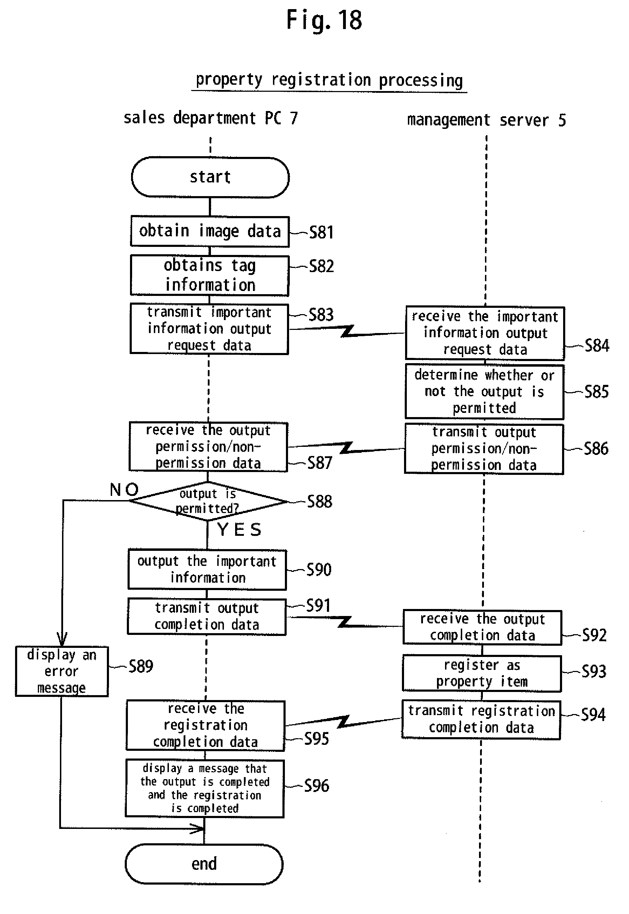

FIG. 18 is a flowchart illustrating property registration processing for managing an output medium having the important information 5c as a property item. In this example, the important information 5c is printed onto the paper medium 51 by the printer 73.

The sales department PC 7 takes an image of a person who intends to output the important information 5c by a digital camera or the like appropriately provided, and obtains image data (step S81). The sales department PC 7 obtains tag information from the non-contact IC tag 19 attached to the leading paper medium 51 among the paper mediums 51 placed on the paper feeding section (i.e., one sheet of paper medium 51 on which the information is about to be printed) by the tag reader/writer section 73a of the printer 73 (step S82).

The sales department PC 7 transmits important information output request data to the management server 5 in an attempt to obtain a permission for outputting the important information 5c (step S83). The important information output request data includes "information name" for identifying the important information 5c and tag information obtained in step S82.

The management server 5 receives the important information output request data (step S84), and determines whether or not to permit the requested important information 5c to be output (step S85). In order to perform this determination, the management server 5 refers to the important information management table of the important information management database 5b to check whether or not "permitted" is stored on the "output permission/non-permission information". The management server 5 also checks whether the non-contact IC tag 19 is authorized or not based on the tag information included in the important information output request data. When the "output permission/non-permission information" represents "permitted" and further the non-contact IC tag 19 is authorized, the management server 5 permits the output. Otherwise, the management server 5 rejects the output.

The determination on whether the non-contact IC tag 19 is authorized or not may be realized by registering an authorized tag ID in the management server 5 or registering a condition for determining that a tag ID is authorized in the management server 5.

The management server 5 transmits the determination result to the sales department PC 7 as the output permission/non-permission data (step S86).

The sales department PC 7 receives the output permission/non-permission data (step S87). When the output is not permitted (step S88: NO), the sales department PC 7 displays an error message and terminates the processing (step S89). The error message may explain a cause of the error, for example, that the paper medium 51 is not authorized or that the requested important information 5c is prohibited from being output.

When the output is permitted (step S88: YES), the sales department PC 7 prints out the important information 5c onto the paper medium 51 by the printer 73 (step S90). The important information 5c is downloaded from the management server 5 at the time of printing. Alternatively, the management server 5 may transmit the important information 5c to the sales department PC 7 in step S86 when the output is permitted.

In step S90, the sales department PC 7 writes, on the non-contact IC tag 19 attached to the paper medium 51, the property ID, the property name, the discard state, and the gate passage permission/non-permission information for each gate, by the tag reader/writer section 73a. When the writing of such information is completed, the non-contact IC tag 19 may also have the manager name, the managing department, the server access authority, the property ID of the apparatus whichwrote the information (in this example, the printer 73) and the like.

The sales department PC 7 transmits output completion data indicating that the output is completed to the management server 5 (step S91).
The management server 5 receives the output completion data (step S92), and registers the non-contact IC tag 19 as a property item in the property management table of the property management database 5a based on the tag information included in the output completion data (step S93). At this point, as the serial number in the property management table, the tag ID or the serial number of the PC (in this example, the sales department PC 7) is registered.
The management server 5 transmits registration completion data indicating that the registration is completed (step S94).

The sales department PC 7 receives the registration completion data from the management server 5 (step S95), displays a message that the output is completed and that the registration is completed on the display device (step S96), and terminates the processing.

The above-described operation is for outputting the important information 5c onto the paper medium 51 by the printer 73. Substantially the same processing is performed for writing the important information 5c on a CD-RW media by the CD-RW drive 71. In Example 2, the act of outputting important information 5c onto an output media is encompassed in an act of introducing a property item.

For reading information from a CD-RW or a CD by the CD-RW drive 71, the same operation as in steps S81 through S90 may be performed except that the information is "read" instead of "output". Thus, information from a medium other than the authorized CD-RW and CD can be prohibited from being read. For reading information, an image of the person who introduced the information may be taken using an appropriate digital camera and stored.

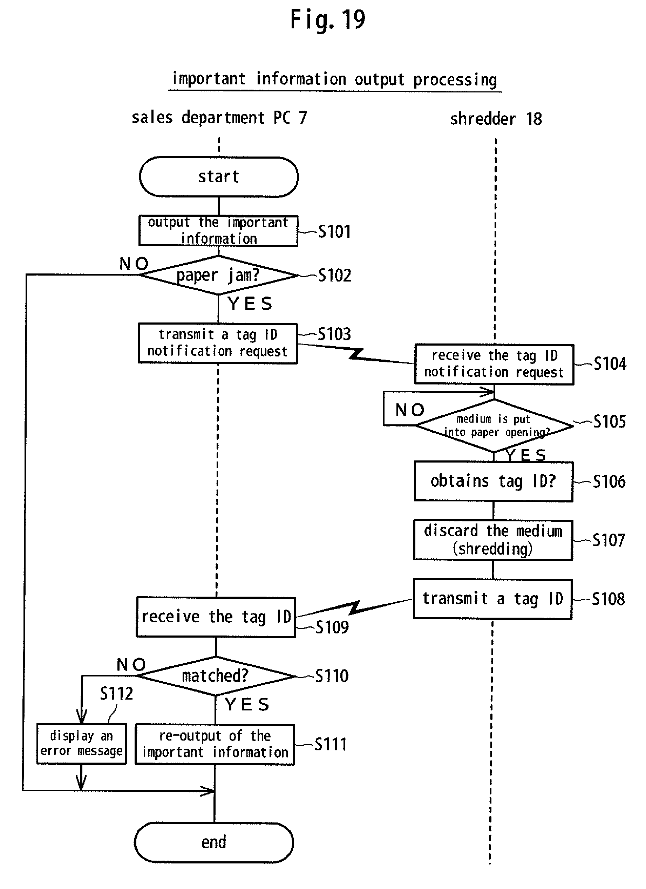

FIG. 19 shows a flowchart illustrating the important information output processing described in step S90 in detail.
The important information output processing can deal with paper jamming, which is a specific problem when the important information 5c is printed onto the paper medium 51 by the printer 73.

The sales department PC 7 performs the processing of printing the important information 5c onto the paper medium 51 (step S101).
When paper jamming occurs during the printing (step S102: YES), the sales department PC 7 transmits a tag ID notification request to the shredder 18 (step S103). The shredder 18 is connected to the Internet 2, but may be directly connected to the sales department PC 7.

The shredder 18 receives the tag ID notification request (step S104), and waits until the paper medium 51 is put into the paper opening (step S105: NO).

When the paper medium 51 is put into the paper opening (step S105: YES), the shredder 18 obtains a tag ID from the non-contact IC tag 19 attached to the paper medium 51 put into the paper opening by the tag reader/writer section 18a (step S106).
The shredder 18 discards the paper medium 51 by shredding (step S107), and transmits the tag ID to the sales department PC 7 (step S108).

The sales department PC 7 receives the tag ID (step S109), and determines whether or not the tag ID matches the tag ID obtained in step S103 (step S110).

When the tag IDs match each other (step S110: YES), the sales department PC 7 determines that the paper medium 51 on which the important information 5c is possibly printed even to the middle thereof was property discarded, and performs re-output of the important information 5c (step S111).

When the tag IDs do not match each other (step S110: NO), the sales department PC 7 displays an error message that the tag IDs do not match each other and that the paper medium 51 which was jammed is prohibited from being taken out even if the paper medium 51 has information printed thereon only to the middle thereof (step S112).

The other structure and operation of Example 2 is the same as those of Example 1 and will not be described in detail.

Owing to the above-described structure and operation, when the important information 5c is output to an output medium, the propertymanagement system 1a can manage the take-out state and the discard of the output medium as a property item. Thus, the important information 5c is prevented from being taken out and leaked.

The important information 5c managed by the management server 5 cannot be output unless the special output software is used. Therefore, the important information 5c is prevented from being output in an unauthorized manner using another device.
The printer 73 or the like which outputs the information can determine whether or not an output medium such as the paper medium 51 which is being used is authorized. Therefore, the important information 5c is prevented from being taken out in the state of being output on an unauthorized paper medium 51.

When, for example, important information 5c is printed on a paper medium which does not have a non-contact IC tag 19, any of the gates 15a through 15e does not detect such a fact when the paper medium passes the gate. In Example 2, however, the important information 5c is rejected from being printed onto an unauthorized paper medium 51 with no non-contact IC tag 19. Therefore, the information is prevented from being taken out in an unauthorized manner.

Among the apparatuses in the sales department PC 7, all the output apparatuses which can output information onto a portable external output medium (in this example, the CD-RW drive 71 and the printer 73) each include a reader/writer section, and the important information 5c is not permitted to be output on an output medium unless the output medium has an authorized non-contact IC tag 19. Therefore, the important information 5c can be prevented with certainty from being taken out in an authorized manner usinganymedium (paper, CD-R, CD-RW, DVD-R, DVD-RW, flexible disc, USB memory, MO, nonvolatile memory card, etc.).

The information on an external medium is limited from being read. Therefore, unauthorized information is prevented from being taken in. For example, the important information 5c in the system is prevented from being replaced with unauthorized information which has been taken in. Especially because the information write on an external medium and information read from an external medium are both limited, an unlawful act of information replacement can be prevented with certainty. Owing to the limitation on the information write, the important information 5c is not leaked. Therefore, unauthorized data is prevented frombeing created by replacing a part thereof. Even if such unauthorized data is created, such data is prevented from being taken into the system owing to the limitation on the information read.

Thus, important information 5c which is intangible is registered and managed when the important information 5c is output on a tangible object, so that leaks of the important information 5c can be prevented without fail. In this manner, a system with a high security level can be provided.

### Example 3

As Example 3, a property management system 1b includes cameras installed in all the computers and also cameras for taking images of the rooms and the gates. The property management system 1b having a function of shooting the inside of a room and a gate and also a function of managing a property item by periodical inspection thereof in addition to the functions of Example 2 will be described.

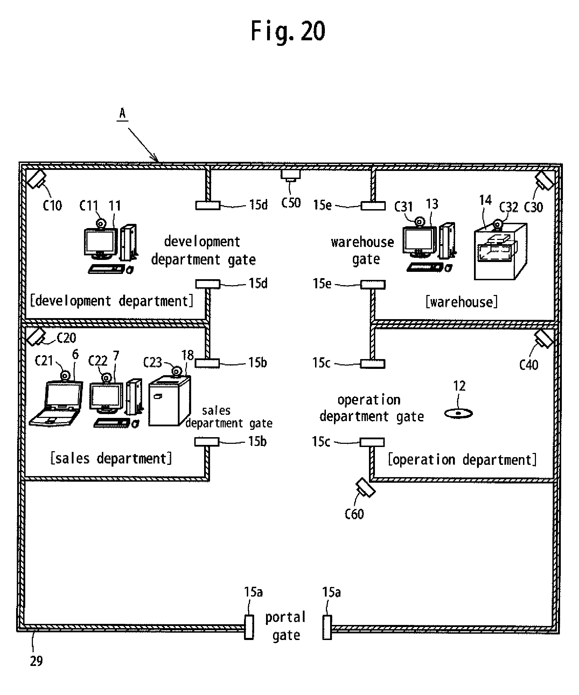

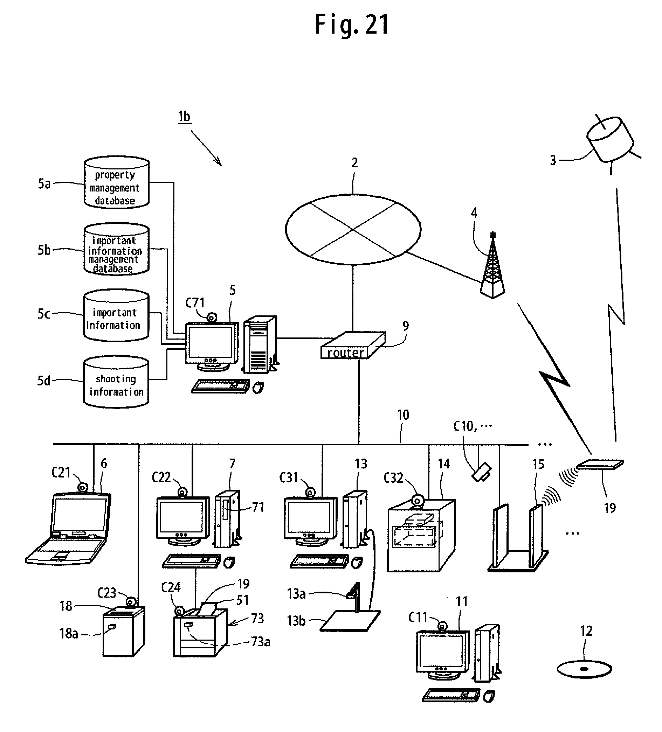

FIG. 20 is a schematic view showing an arrangement of apparatuses of a property management system 1b. FIG. 21 shows a structure of the property management system 1b.
The sales department notebook PC 6, the sales department PC 7, the development department PC 11, the registration apparatus 13, the destruction apparatus 14 and the shredder 18 which are hardware property items respectively include digital cameras C11, C21, C22, C23, C31 and C32. The digital cameras C11, C21, C22, C23, C31 and C32 are CCD cameras capable of taking still pictures and moving pictures and for mainly taking an image of the face of the operator of each of the sales department notebook PC 6, the sales department PC 7, the development department PC 11, the registration apparatus 13, the destruction apparatus 14 and the shredder 18.

Digital cameras C10, C20, C30, C40, C50 and C60 are installed in the rooms, the aisle and the portal. In more detail, in the development department, the digital camera C10 is installed for taking images of the entirety of the room and the gate of the development department. In the sales department, the digital camera C20 is installed for taking images of the entirety of the room and the gate of the sales department. In the warehouse, the digital camera C30 is installed for taking images of the entirety of the room and the gate of the warehouse. In the operation department, the digital camera C40 is installed for taking images of the entirety of the room and the gate of the operation department. In the aisle, the digital camera C50 is installed for taking images of the entirety of the aisle and the exit side of the gates of the rooms (15b, 15c, 15d and 15e). At the portal, the digital camera C60 is installed for taking images of the entirety of the inside of the portal and the portal gate.

On the management server 5, shooting information 5d including moving picture data taken by all the digital cameras (C10, C11, C20, C21, C22, C23, C30, C31, C32, C40, C50, C60, C71) accumulated together with the shooting time is stored. In the shooting information 5d, a room photo which was taken each time a property itempasses the respective gate by one of the digital cameras C10, C20, C30, C40, C50 and C60 which was capable of taking an image of the gate is stored together with the shooting date/time and the tag information of the non-contact IC tag 19 which was read at the gate.

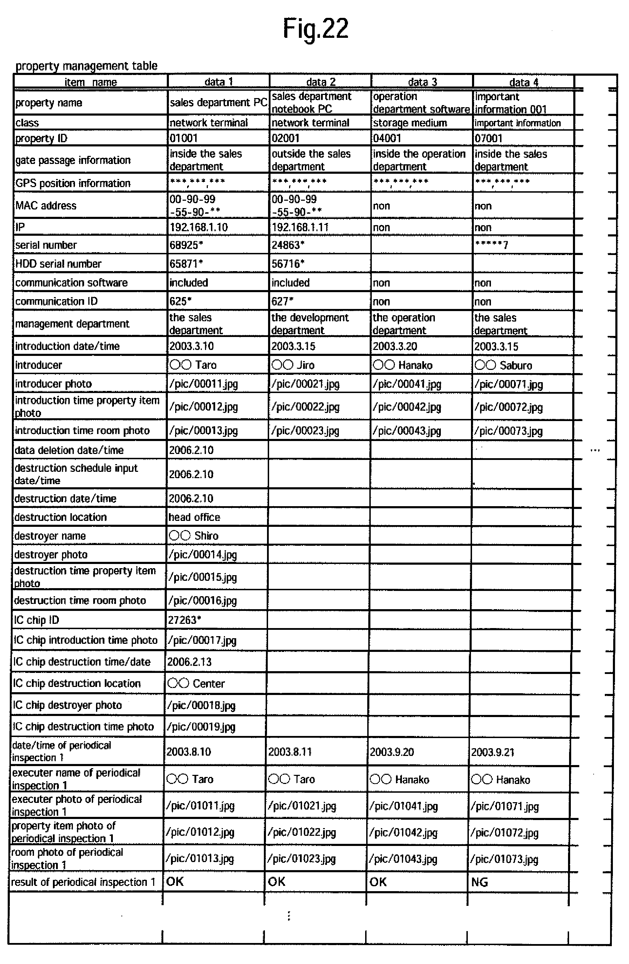

FIG. 22 shows a structure of a property management table stored on the property management database 5a of the management server 5.
The property management table includes introduction time room photo, destruction time room photo, date/time of periodical inspection 1, executer name of periodical inspection 1, executer photo of periodical inspection 1, property item photo of periodical inspection 1, room photo of periodical inspection 1, and the like in addition to the information items in Example 2.

The introduction time room photo stores a photo image of the inside of the warehouse taken by the digital camera C30 installed in the warehouse which accommodates the registration apparatus 13 at the time of introduction of the property item described in Example 1 with reference to FIG. 8. This photo shoot is performed in step S1. In the case where the property item is an output medium such as a paper medium 51 or a CD-RW having the important information 5c stored thereon, this photo shoot is performed in step S81 in FIG. 18 by the digital camera C22 or the like in the sales department PC 7 and registered in step S93.

The destruction time room photo stores a photo image of the inside of the warehouse taken by the digital camera C30 installed in the warehouse which accommodates the destruction apparatus 14 at the time of destruction of the property item described in Example 1 with reference to FIG. 9. This photo shoot is performed in step S31.

The date/time of periodical inspection 1 stores the date/time of periodical inspection of the property item.
The executer name of periodical inspection 1 stores the name of a person who performed the periodical inspection.

The executer photo of periodical inspection 1 stores a facial photo of the person who performed the periodical inspection, which was taken by the digital camera C31 of the registration apparatus 13.
The property item photo of periodical inspection 1 stores a photo of the property item which was taken by the digital camera 13a of the registration apparatus 13 when the periodical inspection was performed.

The room photo of periodical inspection 1 stores a photo of the entirety of the room which was taken by the digital camera C30 in the warehouse which accommodates the registration apparatus 13 when the periodical inspection of the property item was performed.
The result of periodical inspection 1 stores the result of the periodical inspection of the property item as OK or NG.

The property management table in the figure shows only periodical inspection 1. The periodical inspection is performed a plurality of times periodically at an appropriate interval of, for example, annually or semi-annually. Each time the periodical inspection is performed, the inspection record including date/time, executer name, executer photo, property item photo, and room photo is accumulated as periodical inspection 1, periodical inspection 2, ....

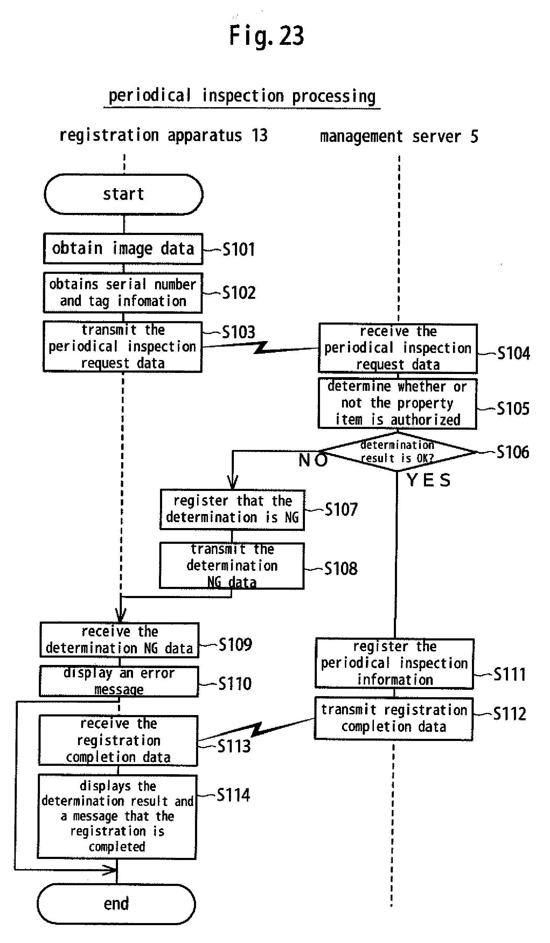

FIG. 23 is a flowchart illustrating the periodical inspection.
When the periodical inspection (for example, the first periodical inspection) is performed, the registration apparatus 13 takes an image of the non-contact IC tag 19 of the property item placed on the table-like tag reader/writer 13b and the vicinity thereof by the digital camera 13a and obtains the property item photo of periodical inspection 1. The registration apparatus 13 takes a facial photo of the operator performing the periodical inspection by the digital camera C31 and obtains the executer photo of periodical inspection 1. The registration apparatus 13 transmits a signal to the digital camera C30 and obtains the room photo of periodical inspection 1, which is a photo of the entirety of the inside of the warehouse taken by the digital camera C30 (step S101) .

The registration apparatus 13 obtains the serial number of the property item by a manual input of the operator or by non-contact communication with the non-contact IC tag 19. The registration apparatus 13 also obtains tag information stored on the non-contact IC tag 19 by non-contact communication between the non-contact IC tag 19 and the table-like tag reader/writer 13b (step S102).

The registration apparatus 13 creates periodical inspection request data including the executer name of periodical inspection 1 which the operator was urged to input, the property item photo of periodical inspection 1, the executer photo of periodical inspection 1, and the room photo of periodical inspection 1, and transmits the periodical inspection request data to the management server 5 (step S103).

The management server 5 receives the periodical inspection request data (step S104), and determines whether or not the property item is authorized based on the periodical inspection request data (step S105). This determination is performed based on whether or not the serial number matches the content of the tag information, or whether or not the information stored in the tag information matches the information stored on the property management database 5a. Using the management server 5, the manager displays the property item photo of periodical inspection 1 in the periodical inspection request data, the introduction time property item photo in the property information of the property item stored on the property management database 5a, and property item photos which were taken in the periodical inspections in the past, and visually checks whether the non-contact IC tag 19 has not been replaced or visually checks the property item has not been replaced with something else based on the scratches and/or stains on the property item itself. When it is recognized that the property item has notbeen changed,the determination resultisOK. Otherwise, determination result is NG and the manager manually inputs the determination result. Instead of visual checking, an image processing technology may be used to determine whether or not the property items has been changed. In this case, it is preferable to take an image of the property item at a determined position.

When the determination result is NG (step S106: NO), the management server 5 registers that the determination is NG in the result of periodical inspection 1 of the property item in the property management table (step S107) and transmits the determination NG data to the registration apparatus 13 (step S108).

The registration apparatus 13 receives the determination NG data (step S109), displays an error message on the screen (step S110), and terminates the processing.

When the determination result is OK (step S106: YES), the management server 5 sets the current date/time counted by the management server 5 as the date/time of periodical inspection 1; and registers the executer name of periodical inspection 1, the property item photo of periodical inspection 1, the executer photo of periodical inspection 1, and roomphoto of periodical inspection 1 which are included in the periodical inspection request data, in the property item section of the property management table as periodical inspection information (step S111).
The management server 5 transmits registration completion data including the determination result to the registration apparatus 13 (step S112).

The registration apparatus 13 receives the registration completion data (step S113), displays the determination result and a message that the registration of the contents of the periodical inspection is completed (step S114), and terminates the processing.

This operation is not limited to the hardware property items. Substantially the same operation is performed for a software property item such as an output medium having important information 5c stored thereon.

Owing to the above-described structure and operation, when a hardware property item is introduced or discarded, an image of the operator who did the introduction or discard can be taken, and an image of the entirety of the room including the vicinity of the operator can be taken. Therefore, a 5W1H record, i.e., who handled which property item when, where, why and how can be stored.

Especially regarding a software property item, the following can be stored and managed regarding data write: (1) by whom, (2) by whose authority, (3) in which location, (4) to whose output medium, (5) which data, (6) with a PC of which serial number (6, 7, 11, etc.), and (7) who was in the room.

For taking out a property item such as an output medium storing the important information 5c, an image of the room photo is taken when the property item passes the gate, and is stored as the shooting information 5d. Therefore, even if the output medium is taken out in an unauthorized manner, it can be checked (1) which gate the medium passed, (2) who possesses the medium, (3) whether a group of people are involved, (3) who else is involved, and (5) what type of outfit he/she is wearing. Even if the property item is transferred to somebody else while being taken out in an unauthorized manner, an image of the transfer can be taken by the cameras C10, C20, C30, C40, C50 or C60 installed in the rooms, the aisle, or the portal. Thus, a person who finally took it out can be specified.

The shooting information 5d stores the shooting information in the form of a moving picture of the room together with the date/time. By linking the shooting information 5d with the gate passage date/time, how the output medium storing the important information 5c was forged or how the property item was taken out can be accurately traced.

Even when a part of the important information 5c stored on an output medium is rewritten, this can be detected by performing periodical inspection.

In this manner, the property management system 1b can monitor all the property items including output mediums storing important information 5c from introduction until discard without fail, prevent unauthorized take-out of a property item or forgery of an output medium, and thus provide a very firm security system.

The elements of the present invention and the elements in the above-described embodiment correspond as follows.
The important information management server of the present invention corresponds to the management server 5.
In the same manner,
the property item corresponds to the management server 5, the sales department notebook PC 6, the sales department PC 7, the development department PC 11, the operation department software 12, the registration apparatus 13, the destruction apparatus 14, and the output medium 51 or the CD-RW having important information 5c written thereon of the embodiment;
the destruction apparatus corresponds to the destruction apparatus 14 and the shredder 18;
the entrance/exit or the aisle corresponds to the portal gate 15a, the sales department gate 15b, the operation department gate 15c, the development department gate 15d, and the warehouse gate 15e;
the non-contact IC medium corresponds to the non-contact IC tag 19;
the reader section corresponds to the tag reader/writer section 25, the tag reader/writer section 73a, and the reader/writer section of the CD-RW drive 71;
the output medium corresponds to the paper medium 51 and the CD-RW;
the information processing apparatus corresponds to the CD-RW drive 71 and the printer 73;
the determination device corresponds to the control section 31 for executing steps S53 and S54;
the passage prohibition device corresponds to the control section 31 for executing step S56;
the important information output medium registration device corresponds to the control device of the management server 5 for executing step S93;
the output permission/non-permission determination device corresponds to the control device of the sales department PC 7 for executing step S88; and
the medium information corresponds to the tag information.
The invention is not limited to the above-described embodiment and may be provided in various other embodiments.

## Claims

1. A property management system, comprising:
a management server for managing a property item by a non-contact IC medium attached to the property item;
a gate apparatus provided at an entrance/exit or an aisle for reading medium information from the non-contact IC medium; and
a destruction apparatus including a reader section for reading the medium information from the non-contact IC medium and a destruction section for destroying the property item;
wherein:
gate passage permission/non-permission information regarding gate passage permission/non-permission for a property item having the non-contact IC medium attached thereto is stored on the management server or the non-contact IC medium;
when destroying the property item, the destruction apparatus transmits the medium information to the management server to perform a destruction completion registration;
the gate apparatus includes:
a determination device for determining whether the gate passage permission/non-permission information represents permission or non-permission based on the medium information read from the non-contact IC medium passing the gate apparatus; and
a passage prohibition device for prohibiting passage when the determination result is non-permission; and
even when the gate passage permission/non-permission information represents non-permission, if the read medium information indicates that the destruction completion registration is already performed, the determination device permits the passage.

2. A property management system, comprising:
a management server for managing a property item by a non-contact IC medium attached to the property item;
a gate apparatus provided at an entrance/exit or an aisle for reading medium information from the non-contact IC medium;
important information management server for managing important information which needs to be managed in terms of taken-out; and
an information processing apparatus for outputting information to an output medium;
wherein:
the gate apparatus includes:
a determination device for determining whether the gate passage permission/non-permission information represents permission or non-permission based on the medium information read from the non-contact IC medium passing the gate apparatus; and
a passage prohibition device for prohibiting passage when the determination result is non-permission; important information gate passage permission/non-permission information regarding gate passage permission/non-permission for an output medium having important information which is output by the information processing apparatus is pre-registered in the important information management server in association with the important information; and
the information processing apparatus includes:
a reader section for reading medium information from the non-contact IC medium attached to the output medium;
an important information output medium registration device for, when the important information managed by the important information management server is output to the output medium, registering the medium information read by the reader section from the non-contact IC medium attached to the output medium in the management server as a property item; and
a device for writing the important information gate passage permission/non-permission information as the gate passage permission/non-permission information regarding the output medium.

3. A property management system according to claim 2, further comprising a shredder including a reader section for reading the medium information from the non-contact IC medium, the shredder being for discarding the output medium;
wherein an error occurs while the important information is being output to the output medium by the information processing apparatus, re-output of the important information is stopped until the reader section reads that the output medium is discarded by the shredder.

4. A property management system according to claim 2 or 3, wherein:
the information processing apparatus includes a reading function of reading information from a medium; and
for reading information from the medium, the medium information is read from the non-contact IC medium attached to the medium by the reader section, and when the medium is not authorized, the information is prohibited from being read.

5. A property management system, comprising:
a camera for obtaining an image of a property item;
a management server for managing the property item by a non-contact IC medium attached to the property item;
a gate apparatus provided at an entrance/exit or an aisle for reading medium information from the non-contact IC medium; and
a destruction apparatus including a reader section for reading the medium information from the non-contact IC medium and a destruction section for destroying the property item;
wherein:
an introduction time image of the property item which is taken by the camera at the time of introduction is registered in the management server; and
for destroying the property item by the destruction apparatus, an image of the property item is taken by the camera to obtain a destruction time image, so that it can be determined whether or not the property item has been replaced based on the destruction time image and images taken in the past.

6. A property management system according to claim 5, wherein an inspection time image is obtained by the camera at the time of periodical inspection, so that it can be determined whether or not the property item has been replaced based on the inspection time image and images taken in the past.

7. A property management system, comprising:
a management server for managing a property item by a non-contact IC medium attached to the property item;
a gate apparatus provided at an entrance/exit or an aisle for reading medium information from the non-contact IC medium;
a destruction apparatus including a reader section for reading the medium information from the non-contact IC medium and a destruction section for destroying the property item; and
a vicinity shooting camera for taking an image of the destruction apparatus and the vicinity thereof;
wherein:
when destroying the property item, the destruction apparatus transmits the medium information together with the date/time of destruction to the management server to perform a destruction completion registration; and
a moving picture taken by the vicinity shooting camera is stored on the management server together with the shooting time.

8. A property management system, comprising:
a management server for managing a property item by a non-contact IC medium attached to the property item;
important information management server for managing important information which needs to be managed in terms of taken-out;
a gate apparatus provided at an entrance/exit or an aisle for reading medium information from the non-contact IC medium;
a destruction apparatus including a reader section for reading the medium information from the non-contact IC medium and a destruction section for destroying the property item;
a property shooting camera for obtaining an image of the property item;
a vicinity shooting camera for taking an image of the destruction apparatus and the vicinity thereof; and
an information output apparatus for outputting information onto an output medium;
wherein:
for managing a take-out state of the property item,
gate passage permission/non-permission information regarding gate passage permission/non-permission on a property item having the non-contact IC medium attached thereto is stored on the management server or the non-contact IC medium;
when the destruction apparatus destroys the property item, the medium information is transmitted to the management server to perform a destruction completion registration; and
when it is determined, based on the medium information read from the non-contact IC medium passing the gate apparatus, that the gate passage permission/non-permission information on the property item represents permission or the destruction completion registration is performed on the property item the gate apparatus permits the property item to pass therethrough; and otherwise, the gate apparatus prohibits the property item from passing therethrough;
for managing an output medium having important information stored thereon as a property item,
when the important information is output to the output medium by the information output apparatus, medium information read by a reader section of the information output apparatus from the non-contact IC medium attached to the output medium is transmitted to the management server to register the output medium as a property item, and important information gate passage permission/non-permission information stored on the important information management server is written as the gate passage permission/non-permission information on the output medium;
for monitoring the property item,
a moving picture taken by the vicinity shooting camera is stored on the management server together with the shooting time;
for managing the position of the property item,
the current position is obtained by a GPS unit included in the non-contact IC medium; and
for inspecting the property item,
an image of the property item is taken by the property shooting camera to obtain an inspection time image, so that it can be determined whether or not the property item has been replaced based on the inspection time image and images taken in the past.
